# EUROPÄISCHE PATENTSCHRIFT

(11) **EP 1 372 373 B1**
(45) Veröffentlichungstag und Bekanntmachung des Hinweises auf die Patenterteilung: **03.11.2004**
(21) Anmeldenummer: 02724269.2
(22) Anmeldetag: 03.04.2002
(51) Int. Cl.: A01G 1/02

(54) **AUS THERMOPLASTISCHEN KUNSTSTOFFEN BESTEHENDE WITTERUNGSBESTÄNDIGE FOLIE**
WEATHER-RESISTANT FILM CONSISTING OF THERMOPLASTIC SYNTHETIC MATERIALS
FILM RESISTANT AUX INTEMPERIES CONSTITUE DE MATIERES SYNTHETIQUES THERMOPLASTIQUES

(30) Priorität: 03.04.2001 DE 10116687
(43) Veröffentlichungstag der Anmeldung: 02.01.2004
(73) Patentinhaber: Israel, Gerhard, 68623 Lampertheim (DE)
(72) Erfinder: Israel, Gerhard, 68623 Lampertheim (DE)
(74) Vertreter: Oehmke, Volker, Dipl.-Math.
(86) Internationale Anmeldenummer: PCT/EP2002/003685
(87) Internationale Veröffentlichungsnummer: WO 2002/080656

(56) Entgegenhaltungen:
- EP-A- 1 101 400
- DE-A- 10 006 651
- DE-C- 19 732 090
- DE-U- 29 609 282
- GR-B- 1 002 842

## Beschreibung

Die Erfindung betrifft eine aus thermoplastischen Kunststoffen bestehende witterungsbeständige Folie in einer Dicke von 20-350 Mikrometer für den Blumen-, Obst- und Gemüseanbau, insbesondere Spargelanbau. Als Folienmaterial kann jedes thermoplastische Material eingesetzt werden, beispielsweise Polyethylen, Polypropylen, Polyester, PVC und andere; vorzugsweise jedoch Polyethylene, wie LDPE, LLDPE, HDPE, VLDPE, mPE und EVA.

Durch die Deutsche Offenlegungsschrift 1 694 598 mit der Bezeichnung "farbige durchsichtige Thermoplastische Stoffe auf der Basis von Vinylchloridpolymerisaten und deren Verwendung in der Landwirtschaft" ist eine aus polymerem Kunststoff bestehende witterungsbeständige Folie in einer Dicke von 20-350 Mikrometer für den Blumen-, Obst- und Gemüseanbau bekannt geworden, welche zum Ziel hat, die Wachstumsförderung zu verbessern und auch die als Glasersatz üblicherweise angewendeten Stoffe zu verbessern. Dies geschieht dort mit einer fotoselektiven Folie, bei welcher weiterhin praktisch eine Undurchsichtigkeit der Folie vorhanden ist, was insbesondere beim Spargelanbau sich als sehr nachteilig beim Erntevorgang erweist, und was zwangsläufig zu einer Beschädigung des geernteten Spargels durch Fehlstechungen und Abbrechen der Köpfe führt.

Durch den Aufsatz "Folieneinsatz bei Spargel - Wohin geht die Entwicklung" von Dieter Weber in: Spargel und Erdbeerprofi 4/99 Seite 6-8 ist es bekannt geworden, mehrschichtige fotoselektive Folien mit einer weißen und einer schwarzen Oberfläche vorzusehen, welche zum einen durch Reflexion eine Kühlung des Ernteguts bewirken, und zum anderen durch Aufnahme von Wärmestrahlung zur Erwärmung der die Pflanzen umgebenden Erde dienen. Auch derartige mehrschichtige Folien sind nicht geeignet, ohne Beeinträchtigung der zu schützenden Pflanze diese in ihrem Wachstum zu unterstützen, auch sind diese nicht geeignet, sicher Schädlinge von den Pflanzen abzuhalten, und auch nicht geeignet, eine Photosynthese zu unterbinden.

Durch den vorliegenden Aufsatz sind auch bereits Antitaufolien und Taschenfolien bekannt geworden (vergl. S. 8, linke Spalte des Aufsatzes undS. 7 den Unterabschnitt "Nachteile"). Antitaufolien sind für den kurzwelligen Lichtbereich durchlässig. Ganz allgemein offenbart dieser Aufsatz auf Seite 7 in der linken Spalte Antitaufolien als dünne, einjährig zu verwendende Folien, die beim Erntevorgang durchstochen werden und Thermofolien, die als mehrjährig zu verwendende Folien bei jedem Stechvorgang abgehoben werden und welche als Taschenfolien ausgebildet sind, zu benutzen.

Ausgehend hiervon liegt der vorliegenden Erfindung die Aufgabe zu Grunde, bei einer für das menschliche Auge durchsichtigen, witterungsbeständigen Folie sicher zu stellen, dass darunter nur die gewünschten Pflanzen ohne Beeinträchtigung ihrer Farbe, ihres Wachstums durch Unkräuter, und ohne Beeinträchtigung durch Schädlinge gedeihen und ohne Schaden zu nehmen, erntbar sind, und dass die witterungsbeständige Folie umweltfreundlich entsorgbar ist.

Diese Aufgabe wird durch die Erfindungen gemäß den unabhängigen Ansprüchen gelöst. Weiterbildungen der Erfindungen sind in den Unteransprüchen gekennzeichnet.

Eine farblose, durchsichtige, witterungsbeständige Folie wird bei ihrer Herstellung zusätzlich mit mindestens einem, insbesondere zwei UV-Absorbern versehen, die Licht in einem Wellenbereich von etwa 180 Nanometer bis etwa 430 Nanometer absorbieren, wobei deren Gewichtsanteil in Abhängigkeit des durch die jeweilige Foliendicke gegebenen Foliengewichts in der witterungsbeständigen Folie von je 0,02% bis 0,1% reicht. Eine derartige erfindungsgemäße Folienabdeckung erscheint zwar für das menschliche Auge durchsichtig, filtert jedoch im Ultra-Violett-Bereich erfindungsgemäß durch die zusätzlichen erfindungsgemäßen UV-Absorber die für die Photosynthese zur Bildung von Chlorophyll erforderlichen UV-Strahlungen heraus, und auch die für die Bildung von Hormonen erforderliche UV-Strahlung. Hierdurch können in kleinen Gewächshäusern und auch bei der Abdeckung von Hügelbeeten, genau wie bei einer Einhausung in einem begehbaren Gewächshaus, insbesondere Spargel ohne Verfärbung des Spargels, auch ohne eine Abdeckung durch Hügel oder Balken in vorgegebener Höhe ohne Aufgrabung geerntet werden. Durch die erfindungsgemäße Zugabe zusätzlicher UV-Absorber mit praktisch völliger Absorbierung der eine Verfärbung der Pflanze hervorrufenden UV-Strahlen bei gleichzeitiger Ausfilterung der für ein Leben der Schadorganismen erforderlichen UV-Strahlen in einem Wellenbereich von ca. 180 Nanometer bis ca. 430 Nanometer durch praktisch gleichbleibende Absorption in diesem Bereich wird erreicht, dass für Spargel die erforderliche Dunkelheit herrscht, und gleichzeitig für den Spargel umgebende oberirdische Unkräuter, die zur Bildung des lebensnotwendigen Chlorophylls erforderliche UV-Strahlung einer bestimmten Wellenlänge ausgeschlossen bleibt.

Genauso wie für das Ungeziefer, wie Fadenwürmer, Engerlinge, Raupen, die für eine Entwicklung oder Weiterentwicklung erforderliche UV-Strahlung ausgefiltert wird. Damit wird erstmalig und überraschend ohne den Einsatz von Giftstoffen und/oder Herbiziden ein ökologisches Heranwachsen von Früchten erreicht. Für andere Nutzpflanzen, wie Bleichsellerie, Rhabarber und Knollenpflanzen, stellt bereits ein zusätzlicher UV-Absorber überraschend und unerwartet eine Lösung der der Erfindung zugrunde liegenden Aufgabe dar.

Als UV-Absorber werden bekannte handelsübliche Produkte auf Basis von Benzophenonen, Benzotriazolen, Hydrophenyltriazinen, hydroxyphenylbenzo Triazolen eingesetzt. Weiterhin kann die erfindungsgemäße Folie weitere Zusätze/Additive enthalten, wie Antioxidantien, Füllstoffe und sonstige Lichtschutzmittel.

Bei der Herstellung einer Folie mit zusätzlichen UV-Absorbern als endlose Antitaufolienbahn bestimmter Breite bei wählbarer Breite des mittleren, für das menschliche Auge durchsichtigen Streifens, können beide verbleibenden Randstreifen bei der Herstellung schwarz eingefärbt werden. Mit einer derartigen Folienbahn lassen sich die bisherigen Hügelbeete für den Spargelanbau sowie Beete für Bleichsellerie und Rhabarber abdecken. Hierbei ist sichergestellt, dass für Bleichsellerie überwachbar die Folie erst dann weggenommen werden muss, wenn aus dem Hügelbeet durch die Antitaufolie sichtbar weiße Blattspitzen austreten, welche sich erst dann durch die möglich werdende Fotosynthese grün färben, während der im Erdreich verbleibende Selleriestängel weiß bleibt. Ähnliches gilt für unter der erfindungsgemäßen Folie heranwachsenden Rhabarber. Hierbei werden die heranwachsenden Rhabarberstangen zu einem verstärkten Längenwachstum angeregt. Nach Erreichen einer vorgegebenen Länge, was zu einer Steigerung des Ertrags durch Etiolieren führt, und Wegnahme der erfindungsgemäßen Folie werden die an den freien Enden der Rhabarberstangen bereits vorhandenen Blätter durch die nunmehr mögliche Fotosynthese zu grünen Rhabarberblättern. Gleichzeitig wird in derselben Weise ein Schädlings- und Unkrautbefall vermieden, ohne dass die Umwelt schädigende Giftstoffe eingesetzt werden müssen.

Ferner zeichnet sich die Folie dadurch aus, dass zusätzlich thermoplastische Kristalle in die farblose, für das menschliche Auge durchsichtige Folie bei-deren Herstellung eingebracht werden, dass entsprechend der Dotierung mit diesen Elementen diese in Abhängigkeit der unter der farblosen, durchsichtigen Folie herrschenden Temperatur zur Kühlung dieses Bereichs die Folie reversibel, undurchsichtig werden lassen. Besonders geeignet hierfür sind tert.-Butylbromid und Cyclohexan, deren Gewichtsanteil bevorzugt in Abhängigkeit des durch die jeweilige Foliendicke gegebenen Foliengewichts in der witterungsbeständigen Folie von 0,02% bis 0,1% reicht. Damit wird sowohl bei der Folie als Abdeckung für Gewächshäuser und dergleichen, als auch bei endlosen Folienbahnen für Hügelbeete erreicht, dass zufolge der erfindungsgemäßen Zufügung und Dotierung von plastischen Kristallen in der Folie eine in Abhängigkeit der Bodentemperatur einsetzende Schattierung wählbarer Stärke für die Pflanzen ermöglicht wird, ohne zusätzliche Schattierungseinrichtungen vorsehen zu müssen.

Für Hügelbeete ist es vorteilhaft, dass die durchsichtige, farblose, mit einer zusätzlichen Menge UV-Absorbern versehene und mit plastischen Kristallen, thermotropen Elementen, dotierte Antitaufolie den Hügelkronenbereich in seiner Länge umfasst, dass die links und rechts anschließenden beiden Böschungsbereiche von den schwarz eingefärbten, Vertiefungen tragenden Randstreifen der einstückigen witterungsbeständigen endlosen Folienbahn überdeckt werden, und dass im Übergangsbereich zwischen Böschung und Hügelbeetsohle die schwarz eingefärbten Randstreifen Öffnungen aufweisen. Hierdurch wird insbesondere für den Spargelanbau in Hügelbeeten die Sicherheit dafür gegeben, dass der zu erntende Spargel vom Ernter gesehen wird, somit unbeschädigt, und ohne eine Verfärbung des herausragenden Spargelteils einschließlich Spargelkopf geerntet werden kann. Nachdem hierbei bei einjährig zu verwendenden dünnen erfindungsgemäßen Folien im Bereich bis ca. 35 Mikrometer Dicke nur in den Bereichen, in welchen eine Ernte stattfindet, die erfindungsgemäße endlose Folienbahn zerstört wird, bleibt für alle anderen Bereiche des Hügelbeets die erfindungsgemäße Folie unverletzt. Auch ist bei derartigen einjährig zu verwendenden Folien die Gewähr dafür gegeben, dass durch Vorsehen der erfindungsgemäßen Öffnungen bei Regen oder einer Bewässerung das anfallende Wasser zum Wurzelstock abgeleitet wird. Da der Kronenbereich des Hügelbeets für das menschliche Auge durchsichtig bleibt, ist es nicht mehr erforderlich, mehrmals am Tag den Spargel - zu ernten, da auch die Gefahr sogenannter blauer Köpfe durch die erfindungsgemäße Folie beseitigt wird. Insgesamt lässt sich hiermit eine qualitative, hochwertige Spargelernte erreichen.

Aneinander anschließende Vertiefungen in den schwarz eingefärbten Randstreifen der witterungsbeständigen Folienbahn besitzen verstärkte Ränder, wobei die Öffnungen von den schwarz eingefärbten witterungsbeständigen Randstreifen in Richtung auf die Böschung des nächsten Hügelbeets abgedeckt werden, und wobei jeder schwarz eingefärbte Randstreifen der Folienbahn unter Freilassung von Eintrittsöffnungen vorgegebener Breite in Folienlängsrichtung oberhalb der Öffnungen mit sich punktuell für eine Kanalbildung verschweißt ist. Durch die erfindungsgemäßen verstärkten Ränder zwischen den Vertiefungen werden stabile Seitenwände erzeugt, welche bei Windeinfall sicherstellen, dass im Kronenbereich keine Folienbahnbewegung stattfindet, durch welche bereits ausgetretene Spargel beschädigt werden könnten, und es wird gleichzeitig durch das nach außen Umschlagen der schwarz eingefärbten Seitenstreifen und deren punktuelles Verschweißen mit sich selbst oberhalb der vorgesehenen Öffnungen sichergestellt, dass bei Niederschlägen natürlicher oder künstlicher Art das auf die Krone des Hügelbeets auffallende Wasser an den Böschungen eindeutig über die Eintrittsöffnungen den Öffnungen zugeleitet wird, um durch diese in den Wurzelbereich der Spargelpflanzen zu gelangen. Hierdurch wird eine Versauerung des Bodens im Sohlenbereich eindeutig vermieden. Beim Bergen der mehrjährig verwendbaren Folien nach Ende der Spargelsaison wird in die Kanäle eingedrungenes Erdreich mit dem ebenfalls in den Kanälen befindlichen Wasser durch die Öffnungen überraschend gut ausgespült; es wird ausdrücklich darauf hingewiesen, dass auch mehrjährig verwendbare Folien, also Folien über 35 Mikrometer, als Antitaufolien herstellbar sind.

Der ungelochte ggf. schwarz eingefärbte Streifenendbereich ist zwischen Öffnung und Außenkante punktuell mit der Oberseite der jeweils schwarz eingefärbten Seitenstreifen in einem vorgegebenen Abstand parallel zu seiner jeweiligen Außenkante verschweißt, wobei der schwarz eingefärbte Streifenendbereich zwischen seiner punktuellen Verschweißung bis zu seiner Außenkante ein frei bewegliches Endstück über die Länge der Folie innerhalb eines röhrenförmigen Kanals bildet. Durch dieses erfindungsgemäße frei bewegliche Endstück werden die Eintrittsöffnungen zwischen den punktuellen Verschweißungen ähnlich einer Rückschlagklappe sicher verschlossen, so dass zum einen während starker Beregnung unter Aufrechterhaltung eines vorgegebenen Zuflusses von Niederschlagswasser zum Wurzelbereich ein Rückfluss aus dem röhrenförmigen Kanal vermieden wird, und zum anderen, insbesondere bei einem Bergen der erfindungsgemäßen Folie am Ende der Saison, das in den röhrenförmigen Kanälen eingeschlossene Wasser zur Spülung der Kanäle selbst herangezogen wird.

Die punktuelle Verschweißung erfolgt zwischen der Oberseite der schwarz eingefärbten Randstreifen und dem ungelochten Endbereich von der Innenseite des röhrenförmigen Kanals her und von der Innenseite der Oberseite der schwarz eingefärbten Randstreifen. Durch diese Art der Innenverschweißung wird der Rückschlageffekt des frei beweglichen Randes beachtlich erhöht.

Zwischen den aus einem mittleren Streifen wählbarer Breite und zwei ggf. schwarz eingefärbten Randstreifen bestehenden endlosen Folienbahnen sind Bänder mit Perforationsöffnungen angeordnet. Durch die Anordnung derartiger Bänder mit Perforationsöffnungen ist sichergestellt, dass auch in den Beetsohlen Regenwasser bzw. beim Beregnen anfallendes Wasser sofort versickert, und damit ein Verschlammen der Sohle zwischen den einzelnen Hügelbeeten eindeutig vermieden wird.

Durch die erfindungsgemäßen Perforationsöffnungen in den Bändern, wird sichergestellt, dass bei Wiederverwendung einer derartigen Folie in der nächsten Saison, bei mehrjährig verwendbaren endlosen Folienbahnen, diese ohne zusätzliche Reinigung sofort voll verwendbar ist.

Die Folie kann aus biologisch abbaubarem Material gefertigt werden. Als biologisch abbaubare Folien eignen sich insbesondere Produkte aus Kartoffelstärke und/oder Maisstärke und Polyesteramid. Es fällt unter den Schutzumfang der vorliegenden Erfindung, dass die Folie selbst verrottungsfähig ausgebildet, praktisch ohne jeden Rückstand, dem natürlichen Kreislauf wieder zuführbar ist.

Eine Anwendung der erfindungsgemäßen Folien und endlosen Bahnen für Schlitzfolien und Schlitzbahnen ermöglicht es erstmals, dass die Samen vorsätzlich eingebrachter Fruchtpflanzen, insbesondere Knollenpflanzen, rascher als das Unkraut bei einem frisch bearbeiteten Boden aufgehen, und zufolge ihrer Stabilität in der Lage sind, die erfindungsgemäßen Folien an vorsätzlich angebrachten Schlitzen zu durchdringen. Damit kann die Nutzpflanze mittels Fotosynthese Chlorophyll bilden und rasch heranwachsen, während die unter der für das menschliche Auge durchsichtigen erfindungsgemäßen Folie vorhandenen Unkrautsamen zufolge Mangels der für ihre Entwicklung erforderlichen Lichtwellenlängen zwischen 180 Nanometer und 430 Nanometer sich nicht entwickeln können. Gleichzeitig wird hierdurch auch der Befall von Schädlingen die zu ihrer Entwicklung ebenfalls diesen Wellenbereich benötigen, durch die erfindungsgemäße Folie unterbunden. Als Folge hiervon ist eine Spritzung mit Herbiziden und/oder anderen Giften bei der Aufzucht von Nutzpflanzen während der Zeit ihrer ersten Entwicklung nicht mehr erforderlich. Somit löst die Anwendung der Erfindung überraschend die Aufgabe, unter Vermeidung von Giftstoffen einen ökologischen Anbau von Fruchtpflanzen zu ermöglichen.

Die erfindungsgemäßen Folien und Bahnen lassen sich auf den Herstellungseinrichtungen praktisch als endlose Bahnen mit vorgegebener Breite oder als vorgegebene Planenabschnitte jederzeit herstellen. Auch fällt es unter den Schutzumfang der Erfindung, wenn der erfindungsgemäße Bereich der für das menschliche Auge durchsichtigen alterungsbeständigen Folie, welcher durch zusätzliche Zugabe von UV-Absorbern eine Fotosynthese für darunter liegende Pflanzenbestandteile und Pflanzen verhindert, in vorgegebener Breite als endlose Folienbahn hergestellt wird, während gleichzeitig links und rechts während der Herstellung dieser Folienbahn witterungsbeständige schwarz eingefärbte Folienbahnen erzeugt werden, welche bei einer gemeinsamen Herstellung der Folienbahnen an ihren Längsrändern fortlaufend verbunden werden; auch dann wenn die schwarz eingefärbten witterungsbeständigen Folien Vertiefungen und die Vertiefung diese umgebende verstärkte Ränder tragen. Dies kann im Hinblick auf rationelle und kostengünstige Herstellung derartiger Gesamtbahnen angebracht sein, um für spezielle Anwendungsfälle möglichst kostengünstige Produkte zu erzeugen. Dasselbe gilt auch für eine erfindungsgemäß ausgestattete Antitaufolie genau wie für Schlitzfolien.

Eine erfindungsgemäße Mischung zur Herstellung einer zusätzliche UV-Absorber enthaltenden Folie besteht aus bekanntem Polyethylen Granulat, dem im Wesentlichen in bekannter Weise 0,15% "Synergistic Mixture of Oligomeric Hindered Amine Stabilizers" aus Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] und Butanedioic acid, dimethylester, polymer with 4-hydroxy-2,2,6,6-tetramethyl-1-piperidine ethanol als UV-Stabilisator beigefügt wurde, 0,10% "Synergistic Processing and Long-Term Thermal Stabilizer System" gegen Zerreißen der Folie bei ihrer Herstellung und als Antitaumittel (1,5 %) Sorbitanester beigefügt wurde und der neuen erfinderischen zusätzlichen Beimischung von 0,02% Benzophenone UV-Absorber mit der chemischen Bezeichnung: Methanone, 2-hydroxy-4-(octyloxy)-phenyl und 0,02% Benzotriazole UV-Absorber mit der chemischen Bezeichnung: Phenol, 2-(5-chloro-2H-benzotriazole-2-yl)-6-(1,1-dimethylethyl)-4-methyl. Hierdurch wurde überraschend ein völliger Schutz von Spargeln gegen Verfärben bei gleichzeitiger Sicherheit vor Ungeziefer und Unkraut erreicht.

In den nachfolgenden Zeichnungen wird die Erfindung anhand eines schematisch dargestellten Ausführungsbeispiels näher erläutert.
Figur 1 zeigt in Draufsicht eine erfindungsgemäße Folie und
Figur 2 zeigt eine Anwendung der erfindungsgemäßen Folie bei einem Hügelbeet.

In den Figuren werden dieselben Bauteile mit den gleichen Bezugsziffern bezeichnet.

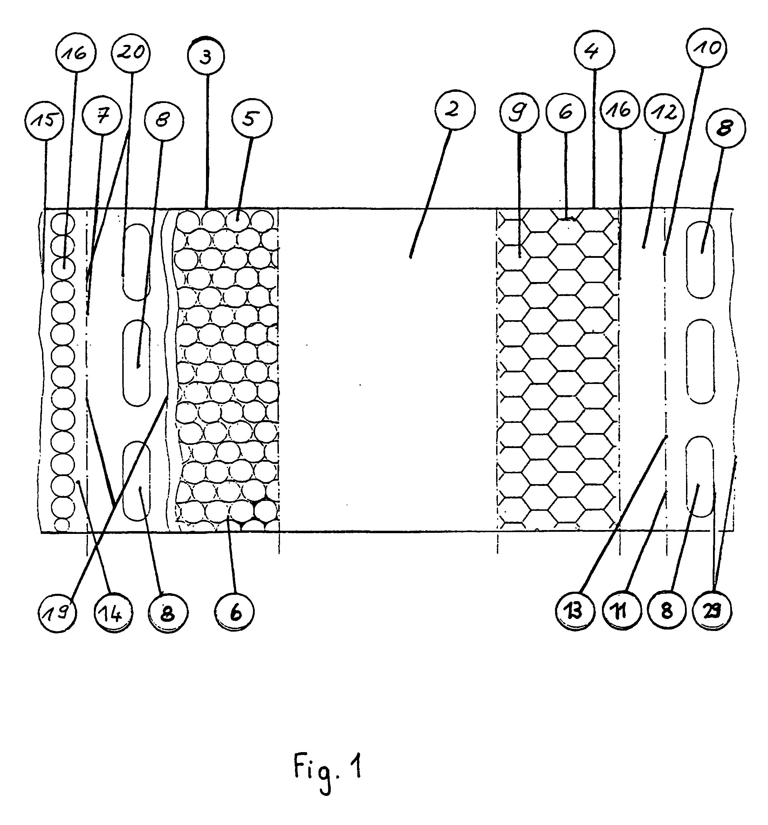

Figur 1 zeigt einen aus drei Streifen bestehenden Abschnitt einer endlosen Folienbahn 1 gemäß der Erfindung. In diesem Falle wird ein in seiner Breite wählbarer, mittlerer, durchsichtiger Streifen 2 mit einem linken schwarz eingefärbten Randstreifen 3 und einem rechten schwarz eingefärbten Randstreifen 4 als endlose Bahn auf einer Herstellungsmaschine hergestellt.

Wie bereits ausgeführt, kann jedoch der für das menschliche Auge durchsichtige mittlere Streifen 2, welcher auch mit Elementen versehen ist, welche einen Antitaueffekt bewirken, wobei gleichzeitig in diesem durchsichtigen Streifen auch thermotrope Elemente bei der Herstellung eingebettet werden, für sich auf einer Einzelmaschine hergestellt werden, während der linke Randstreifen 3 und der rechte Randstreifen 4 ebenfalls auf Einzelmaschinen hergestellt werden, wobei dann am Austritt dieser drei nicht dargestellten Maschinen die einander gegenüberliegenden Ränder des durchsichtigen Streifens 2 und der Randstreifen 3 und 4 miteinander unlösbar verbunden werden.

Im linken Randstreifen 3 schließen sich unmittelbar an den durchsichtigen mittleren Streifen 2 runde Vertiefungen 5 an, mit verstärkten Vertiefungsrändern 6. Hieran anschließend in Richtung zur Außenkante 7 des linken Randstreifens 3 sind im linken Randstreifen 3 Öffnungen 8 vorgesehen, welche gemäß Ausführungsbeispiel eine ovale Form in Bahnrichtung besitzen.

Der rechte Randstreifen besitzt als eine andere Ausgestaltung wabenförmige aneinander anschließende Vertiefungen 9, mit ebenfalls verstärkten Vertiefungsrändern 6.

Anstelle der Vertiefung 5 bzw. 9 können entsprechend den Gegebenheiten beliebige Formen der Vertiefung gewählt werden, welche an Ihren jeweils gemeinsamen Rändern 6 verstärkt ausgebildet sind. Durch diese verstärkte Ausbildung der Vertiefungsränder 6 wird eine Stabilisierung der erfindungsgemäßen Folien 1 im Hinblick auf die Windeinwirkung und das Verwehen der gesamten Folie insbesondere bei der Abdeckung von nicht dargestellten Hügelbeeten erreicht.

An die wabenförmigen Vertiefungen 9 im rechten Randstreifen 4 schließen sich Öffnungen 8 an, welche durch Umschlagen des rechten Rands 10 nach außen und dessen punktuelles Verschweißen mit dem rechten Randstreifen auf dessen Oberseite 12, oberhalb der Öffnungen 8 Eintrittsöffnungen 13 bilden, durch welche bei Hügelbeeten vom durchsichtigen Streifen 2 und den Randstreifen 3 und 4 ablaufendes Wasser ungehindert zu den Öffnungen 8 für eine Weiterleitung in den Wurzelbereich einer Nutzpflanze 22 geführt wird.

Wie bereits ausgeführt, wird durch eine derartige ausgestaltete erfindungsgemäße Folie sichergestellt, dass auch bei Windeinfall eine Beschädigung von Spargeln vermieden wird, bei gleichzeitiger Vermeidung einer Versauerung der zwischen den einzelnen Hügeln liegenden Sohlen zufolge Ableitens anfallenden Wassers in den Wurzelbereich der Nutzpflanze 22.

Werden mehrere erfindungsgemäße Folienbahnen 1 über die Anordnung erfindungsgemäßer Bänder 14 miteinander verbunden, so wird hierdurch erstmals ein Abfluss von in der Sohle stehendem Wasser, welches bei Beregnung oder natürlichen Niederschlägen anfällt, ermöglicht. Hierdurch wird eine Verschlammung und Verunkrautung der Sohle zwischen den einzelnen Hügelbeeten vermieden, wenn auch das Band 14 insbesondere aus einer erfindungsgemäßen Mischung wie die der witterungsbeständigen Folie 1 hergestellt ist.

Im Ausführungsbeispiel verbindet das Band 14 die Außenkante 15 eines sich hieran nach links anschließenden weiteren Folienbandes 1'.

Hierbei ist es entsprechend den verwendeten Folienherstellungsmaschinen möglich, mehrere nebeneinander liegende Folienbahnen 1 und 1' mit dazwischen liegendem Band 14 gleichzeitig herzustellen, oder wie oben ausgeführt, alle Bereiche einzeln herzustellen und diese nach der Herstellung gemeinsam zu einer breiten witterungsbeständigen Folienbahn mit dazwischen angeordneten Bändern 14 zu vereinigen. Die Bänder 14 stellen erfindungsgemäß auch mögliche mit Werkzeug auftrennbare Trennstellen dar. Damit wird erreicht, dass die letzte Sohle eines Hügelbeetes über dann aufgetrennte Perforationsöffnungen 16 ebenfalls entwässerbar ist, da die seitliche Begrenzung auch beim Auflegen von Belastungsgliedern, wie Sandsäcken, um ein Wegfliegen der Folie bei Windeinfall zu vermeiden, mäanderförmig verläuft.

Das dargestellte Ausführungsbeispiel stellt eine erfindungsgemäße Folienbahn für das Abdecken eines Hügelbeets dar, bei welchem die beiden Randstreifen 3 und 4 schwarz eingefärbt sind und Vertiefungen tragen, um zusätzlich eine Temperaturerhöhung in der Erde des Böschungsbereichs eines nicht dargestellten Hügelbeets zu erreichen. Derartige Hügelbeete sind, wie bereits ausgeführt, sowohl bei Spargeln als auch bei Bleichsellerie zum Zwecke der Vermeidung einer Verfärbung des Nahrungsmittels einsetzbar. Beim Einsatz der Folie für die Erzeugung von Bleichsellerie in einem Hügelbeet ist der für das menschliche Auge durchsichtige mittlere Streifen 2 als Schlitzfolienbahn ausgebildet, wobei nach Bilden des entsprechend grünen, die Schlitzfolie durchdrungenen Krautes nach Wegnahme der Schlitzfolien der Bleichsellerie geerntet werden kann, ohne erneut einem Bleichvorgang unterzogen werden zu müssen. Damit lässt sich eine wesentliche Verbilligung bei der Erzeugung von Bleichsellerie erreichen.

Im Falle der Erzeugung von im Wesentlichen auf ebenen Feldern angebauten Nahrungsmitteln, treten anstelle der schwarz eingefärbten Randbereiche bevorzugt ebenfalls für das menschliche Auge durchsichtige Bereiche, welche mit Öffnungen 8 versehen sind, um das auf der erfindungsgemäßen Folie bei der Beregnung sich ansammelnde Wasser ohne Stau an die Wurzeln der Pflanzen leiten zu können. Um bei Rhabarber durch Etiolieren möglichst lange Rhabarberstangen zu erzielen, empfiehlt sich hier eine Überwachung der Gewächse, und bei gewünschter Länge der Stangen ein Abnehmen der erfindungsgemäßen Folie.

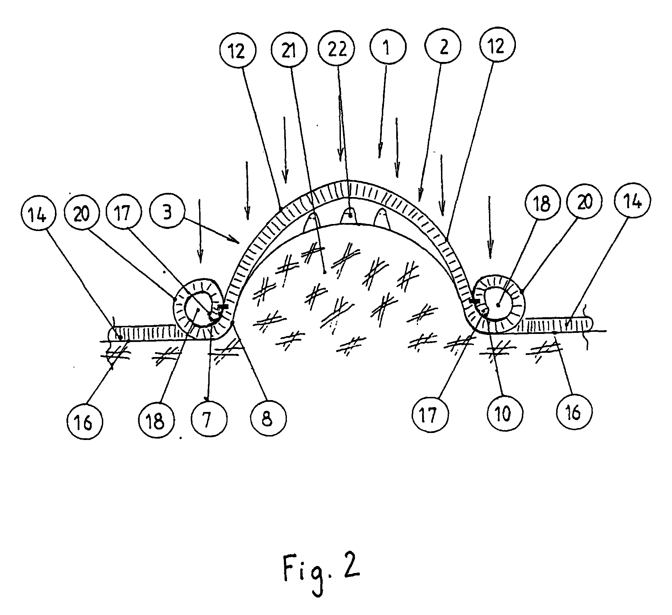

In Figur 2 wird die Folienbahn 1 als Abdeckung für ein Hügelbeet 21 dargestellt. Ein Querschnitt durch das Hügelbeet 21 mit schematisch dargestelltem Gemüse 22 unterhalb der Folienbahn 1 zeigt die Folienbahn 1 in vergrößerter Foliendicke.

Die schwarz eingefärbten Randstreifen 2 und 3 sind an ihren Enden zu röhrenförmigen Kanälen 18 eingerollt, und oberhalb der Öffnungen 8 mit der Oberfläche 12 der schwarz eingefärbten linken und rechten Randstreifen 3,4 mittels Punktschweißung zusammen geschweißt. Bei auftretendem Regen oder einer Bewässerung tritt zunächst Wasser in die Eintrittsöffnungen 13 ein, und kann über die Öffnungen 8 in das Hügelbeet 21 im Bereich der Wurzeln der abgedeckten Pflanzen 22 eindringen. Bei Anfall einer beachtlichen Menge von Beregnungswasser wird zunächst der röhrenförmige Kanal 18 angefüllt, und das frei bewegliche Endstück 17 vermindert den Zufluss weiteren Wassers in den röhrenförmigen Kanal 18, so dass von dort aus gleichförmig eine Bewässerung des Hügelbeets stattfinden kann. Überschüssiges Beregnungswasser wird über die Perforationsbohrungen 16 in den Bändern 14 in den Sohlenbereich der Hügelbeete abgeleitet, so dass eine Verschlammung des Sohlenbereichs ausgeschlossen ist. Wird nunmehr am Ende einer Saison eine derartig mehrjährige erfindungsgemäße Folienbahn maschinell geborgen, kann das in den röhrenförmigen Kanälen 18 befindliche Wasser durch den Rückschlageffekt des jeweiligen frei beweglichen Endstücks 17, das sich gemäß Ausführungsbeispiel über die gesamte Länge der Folienbahn erstreckt, nicht beliebig austreten, sondern nur jeweils über die Öffnungen 8 oder am Ende des röhrenförmigen Kanals 18. Damit ist sichergestellt, dass in den Kanal 18 eingedrungene Erde eindeutig beim Bergen der Folie ausgeschwemmt wird. Wie in Figur 1 dargestellt, sind die Punktverschweißungen 11 jeweils oberhalb der Öffnungen 8 in Richtung auf die Hügelkrone zu angeordnet, nachdem der vorgebbare Abstand 19 stets größer als der ungelochte Endbereich 20 der schwarz eingefärbten Randstreifen 3 und 4, der den Abstand zwischen dem Rand 10 und dem Rand 7 und den jeweiligen Öffnungen 8 beschreibt, ist.

Wird die erfindungsgemäße Folie nur für eine Saison verwendet, sind die in Figur 2 näher beschriebenen röhrenförmigen Kanäle nicht erforderlich, jedoch die Öffnungen 8.

## Patentansprüche

1. Verfahren zur Aufzucht von Spargel und anderen Nutzpflanzen, wie Bleichsellerie, Rhabarber und Knollenpflanzen, bei denen bis zu ihrer Ernte eine Verfärbung der Nutzpflanze verhindert werden soll, mit folgenden Schritten:
eine witterungsbeständige Folie aus thermoplastischen Kunststoffen in einer Dicke von 20-350 Mikrometern wird gewählt, wobei die Folie farblos und durchsichtig ist, und wobei die Folie zusätzlich mit mindestens einem, insbesondere zwei UV-Stabilisatoren versehen ist, die Licht in einem Wellenbereich von etwa 180 Nanometer bis etwa 430 Nanometer absorbieren, deren Gewichtsanteil von je 0,02-0,1% reicht; und
die Folie wird zur Flachbedeckung eines Beets, insbesondere eines Hügelbeets, verwendet, in dem die genannten Nutzpflanzen wachsen.

2. Verfahren nach dem vorhergehenden Anspruch, **dadurch gekennzeichnet, dass** bei der Herstellung der Folie (1) als endlose Antitaufolienbahn bestimmter Breite bei wählbarer Breite eines mittleren, für das menschliche Auge durchsichtigen Streifens (2) die verbleibenden Randstreifen (3, 4) schwarz eingefärbt werden.

3. Verfahren nach einem der vorhergehenden Ansprüche, **dadurch gekennzeichnet, dass** zusätzlich thermoplastische Kristalle in die farblose, für das menschliche Auge durchsichtige Folie (1) bei deren Herstellung eingebracht werden, dass entsprechend der Dotierung mit diesen Elementen diese in Abhängigkeit der unter der farblosen, durchsichtigen Folie (1) herrschenden Temperatur zur Kühlung dieses Bereichs die Folie (1) reversibel undurchsichtig werden lassen.

4. Verfahren nach einem der vorhergehenden Ansprüche, **dadurch gekennzeichnet, dass** für Hügelbeete (21) der mittlere Streifen der Antitaufolie (2) den Hügelkronenbereich in seiner Länge umfasst, dass die links und rechts anschließenden beiden Böschungsbereiche von den schwarz eingefärbten Randstreifen (3, 4) überdeckt werden, und dass im Übergangsbereich zwischen Böschung und Hügelbeetsohle in den schwarz eingefärbten Randstreifen Öffnungen (8) vorgesehen werden.

5. Aus thermoplastischen Kunststoffen bestehende witterungsbeständige Folie, in einer Dicke von 20-350 Mikrometern, für den Blumen-, Obst- und Gemüseanbau, insbesondere Spargelanbau,
**dadurch gekennzeichnet,**
**dass** eine farblose, durchsichtige Folie (1) zusätzlich mit mindestens einem, insbesondere zwei UV Stabilisatoren versehen wird, die Licht in einem Wellenbereich von etwa 180 Nanometer bis etwa 430 Nanometer absorbieren, dass deren Gewichtsanteil in Abhängigkeit des durch die jeweilige Foliendicke gegebenen Foliengewichts in der witterungsbeständigen Folie von je 0,02-0,1% reicht;
**dass** bei der Herstellung der Folie (1) als endlose Antitaufolienbahn bestimmter Breite ein mittlerer Streifen (2) und zwei Randstreifen (3, 4) ausgebildet sind;
**dass** im Übergangsbereich zwischen mittlerem Streifen (2) und den beiden Randstreifen (3, 4) Öffnungen (8) in der Folie vorgesehen sind; und
**dass** jeder Randstreifen (3, 4) der Folie (1) unter Freilassung von Eintrittsöffnungen (13) vorgegebener Breite in Folienlängsrichtung oberhalb der Öffnungen (8) mit dem mittleren Streifen (2) punktuell für eine Kanalbildung verschweißbar ist.

6. Folie nach Anspruch 5, **dadurch gekennzeichnet, dass** jeder Randstreifen (3, 4) zwischen den Öffnungen (8) und der Außenkante (15) der Folie (1) punktuell mit der Oberseite (12) des jeweiligen Seitenstreifen (3, 4) derart parallel zu seiner Außenkante (15) verschweißt ist, und dass der Randstreifen zwischen seiner punktuellen Verschweißung (11) und seiner Außenkante (15) ein frei bewegliches Endstück (10) über die Länge der Folie (1) innerhalb des Kanals bildet.

7. Folie nach einem der Ansprüche 5 bis 6, **dadurch gekennzeichnet, dass** die Randstreifen (3,4) schwarz eingefärbt sind.

8. Folie nach einem der Ansprüche 5 bis 7, **gekennzeichnet durch** zusätzliche thermoplastische Kristalle, die in den mittleren Streifen (2) eingebracht sind, dass entsprechend der Dotierung mit diesen Elementen diese in Abhängigkeit der unter dem mittleren Streifen herrschenden Temperatur zur Kühlung dieses Bereichs die Folie (1) reversibel undurchsichtig werden lassen.

9. Folie nach einem der Ansprüche 5 bis 8, **dadurch gekennzeichnet, dass** zwischen dem mittleren Streifen (2) und den Randstreifen (3, 4) Bänder (14) mit Perforationsöffnungen (16) angeordnet sind.

10. Folie nach einem der Ansprüche 5 bis 9, **dadurch gekennzeichnet, dass** die Folie (1) aus biologisch abbaubaren Materialien gebildet ist.

11. Anwendung der Folie nach einem der Ansprüche 5 bis 10 für Schlitzfolien und Schlitzbahnen.

## Claims

1. A method of cultivating asparagus and other useful plants, such as blanching celery, rhubarb and tuberous plants, designed to prevent discoloration of the useful plant until their harvest, said method comprising the following steps, wherein:
a weatherproof foil of thermoplastic plastic materials having a thickness of 20-350 micrometers is selected, said foil being colorless and transparent, and said foil being additionally provided with at least one, in particular two UV stabilizers, which absorb light within a wavelength range of from about 180 nanometers to about 430 nanometers, the weight percentage of said UV stabilizers ranging from 0.02-0.1% each; and
said foil is used for flat covering of a bed, in particular a ridge bed, in which said useful plants grow.

2. The method according to the preceding claim, **characterized in that**, during manufacture of the foil (1) as an endless sheet of anti-dew foil having a certain width, with a selectable width of a center strip (2), which is transparent to the human eye, the remaining edge strips (3, 4) are blackened.

3. The method according to any one of the preceding claims, **characterized in that** thermoplastic crystals are additionally incorporated into the colorless foil (1), during manufacture thereof, said foil being transparent, **in that**, according to the doping with these elements, they make this region of the foil (1) reversibly non-transparent, so as to cool it, as a function of the temperature prevailing under the colorless, transparent foil (1).

4. The method according to any one of the preceding claims, **characterized in that** for ridge beds (21), the center strip of the anti-dew foil (2) comprises the length of the ridge crest area, **in that** the ridge flank areas adjacent thereto on the left-hand and right-hand sides are covered by the blackened edge strips (3, 4), and **in that** openings (8) are provided in the blackened edge strips in the transitional region between the flank and the bottom of the ridge bed.

5. A weatherproof foil consisting of thermoplastics and having a thickness of 20-350 micrometers for the cultivation of flowers, fruits and vegetables, in particular for cultivating asparagus,
**characterized**
**in that** a colorless, transparent foil (1) is additionally provided with at least one, in particular two UV stabilizers, which absorb light in a wavelength of from about 180 nanometers to about 430 nanometers,
**in that** their weight percentage in the weatherproof foil ranges from 0.02-0.1% each, depending on the foil weight determined by the respective foil thickness;
**in that**, during manufacture of the foil (1) as an endless sheet of anti-dew foil having a predetermined width, a center strip (2) and two edge strips (3, 4) are formed;
**in that** openings (8) are provided in the foil in the transitional region between the center strip (2) and said two edge strips (3, 4); and
**in that** each edge strip (3, 4) of the foil (1) can be spot-welded to the center strip (2) above the openings (8) to form a channel, while leaving free inlet openings (13) having a predetermined width in the longitudinal direction of the foil.

6. The foil according to the preceding claim, **characterized in that** each edge strip (3, 4) is spot-welded in such a manner, between the openings (8) and the outer edge (15) of the foil (1), with the upper surface (12) of the respective edge strip (3, 4) parallel to the outer edge (15) thereof, and **in that** the edge strip forms a freely movable end piece (10) over the length of the foil (1), within the channel, between its spot-weld (11) and its outer edge (15).

7. The foil according to any one of claims 5 to 6, **characterized in that** the edge strips (3, 4) are blackened.

8. The foil according to any one of claims 5 to 7, **characterized by** additional thermoplastic crystals being incorporated into the center strip (2), in that, according to the doping with these elements, they make this region of the foil (1) reversibly non-transparent, so as to cool it, as a function of the temperature prevailing under the center strip.

9. The foil according to any one of claims 5 to 8, **characterized in that** bands (14) with perforation openings (16) are arranged between the center strip (2) and the edge strips (3, 4).

10. The foil according to any one of claims 5 to 9, **characterized in that** the foil (1) is made of biodegradable materials.

11. Use of the foil according to any one of claims 5 to 10 for slotted foils and slotted sheets.

## Revendications

1. Procédé destiné à cultiver l'asperge et autres plantes utiles, comme, par exemple le céleri à côtes, le rhubarbe et les plantes à tubercules, dans lesquels une décoloration de la plante utile doit être empêchée jusqu'à leur récolte, ledit procédé comprenant les étapes suivantes:
une feuille résistant aux intempéries en matériaux thermoplastiques d'une épaisseur de 20-350 micromètres est choisie, ladite feuille étant sans couleur et transparente, et ladite feuille étant, en plus, pourvue d'au moins un, particulièrement deux, stabilisateurs UV, qui absorbent la lumière dans une gamme de longeurs d'ondes d'environ 180 nanomètres à environ 430 nanomètres, le pourcentage en poids desdits stabilisateurs UV étant compris entre 0.02 et 0.1% pour chacun d'entre eux; et
ladite feuille est utilisée pour la couverture plate d'un carré, particulièrement une butte, où poussent lesdites plantes utiles.

2. Procédé selon la revendication précédente, **caractérisé en ce que**, pendant la fabrication de la feuille (1) comme bande continue de feuille anti-rosée d'une certaine largeur, avec une largeur selectionnable pour une bande centrale (2) qui est transparente pour l'oeil humain, les bandes marginales (3, 4) qui restent sont noircies.

3. Procédé selon l'une quelconque des revendications précédentes, **caractérisé en ce que** des cristaux thermoplastiques sont en plus introduits dans la feuille (1) sans couleur, pendant sa fabrication, ladite feuille étant transparente, **en ce que**, selon le dopage avec ces éléments, ceux-ci font cette région de la feuille (1) réversiblement non-transparente, afin de refroidir celle-ci, dépendant de la température prédominante sous la feuille (1) sans couleur et transparente.

4. Procédé selon l'une quelconque des revendications précédentes, **caractérisé en ce que**, pour les buttes (21), la bande centrale de la feuille anti-rosée (2) comprend la longueur de la zone de couronne de la butte, **en ce que** les flancs adjacents à gauche et à droite sont recouverts par les bandes marginales noircies (3, 4), et **en ce que** des ouvertures (8) sont prévues dans les bandes marginales noircies, dans la zone de passage entre le flanc et le fond de la butte.

5. Feuille résistant aux intempéries consistant de matériaux thermoplastiques et ayant une épaisseur de 20-350 micromètres, destinée à cultiver des fleurs, des fruits et des légumes, particulièrement à cultiver de l'asperge,
**caractérisée**
**en ce qu'**une feuille sans couleur et transparente (1) est en plus pourvue d'au moins un, particulièrement deux, stabilisateurs UV, qui absorbent la lumière d'une longueur d'ondes compris entre environ 180 nanomètres et environ 430 nanomètres, en ce que leur pourcentage en poids dans la feuille résistant aux intempéries est compris entre 0.02 et 0.1% pour chacun d'entre eux, selon le poids de la feuille déterminé par la épaisseur respective de la feuille;
**en ce que**, pendant la fabrication de la feuille (1) comme bande continue de feuille anti-rosée ayant une largeur déterminée, une bande centrale (2) et deux bandes marginales (3, 4) sont formées;
**en ce que** des ouvertures (8) sont prévues dans la feuille, dans la zone de passage entre la bande centrale (2) et les deux bandes marginales (3, 4); et
**en ce que** chaque bande marginale (3, 4) de la feuille (1) peut être soudée par point à la bande centrale (2), au-dessus des ouvertures (8), afin de former une lumière, en laissant libre des ouvertures d'admission (13) ayant une largeur déterminée dans la direction longitudinale de la feuille.

6. Feuille selon la revendication précédente, **caractérisé en ce que** chaque bande marginale (3, 4) est soudée par point, entre les ouvertures (8) et le congé extérieur (15) de la feuille (1), avec la face supérieure (12) de la bande marginale (3, 4) respective, paralléle au congé extérieur (15) de celle-ci de cette manière, et **en ce que** la bande marginale constitue un embout (10) qui peut être librement déplacé le long de la feuille (1), dans la lumière, entre son soudage par point (11) et son congé extérieur (15).

7. Feuille selon l'une quelconque des revendications 5 à 6, **caractérisé en ce que** les bandes marginales (3, 4) sont noircies.

8. Feuille selon l'une quelconque des revendications 5 à 7, **caractérisée par** des cristaux thermoplastiques additionnels étant introduits dans la bande centrale (2), en ce que, fonction de la température prédominante sous la bande centrale, lesdits éléments font cette région de la feuille (1) réversiblement non-transparente, afin de refroidir celle-ci, selon leur dopage.

9. Feuille selon l'une quelconque des revendications 5 à 8, **caractérisée en ce que** des rubans (14) comprenant des ouvertures de perforation (16) sont disposés entre la bande centrale (2) et les bandes marginales (3, 4).

10. Feuille selon l'une quelconque des revendications 5 à 9, **caractérisée en ce que** la feuille (1) est constituée de matériaux biodégradables.

11. Utilisation d'une feuille selon l'une quelconque des revendications 5 à 10 pour des feuilles à fente et des bandes de feuille à fentes.
